# EUROPÄISCHE PATENTSCHRIFT

(11) **EP 4 124 235 B1**
(45) Veröffentlichungstag und Bekanntmachung des Hinweises auf die Patenterteilung: **10.06.2026**
(21) Anmeldenummer: 22166628.2
(22) Anmeldetag: 05.04.2022
(51) Int. Cl.: A01D 61/00, A01F 12/10, B65G 23/06

(54) **SCHRÄGFÖRDERER SOWIE SELBSTFAHRENDE ERNTEMASCHINE MIT EINEM SCHRÄGFÖRDERER**
INCLINED CONVEYOR AND SELF-PROPELLED HARVESTER WITH AN INCLINED CONVEYOR
TRANSPORTEUR INCLINÉ ET MACHINE DE RÉCOLTE AUTONOME DOTÉE D'UN TRANSPORTEUR INCLINÉ

(30) Priorität: 30.07.2021 DE 102021119909
(43) Veröffentlichungstag der Anmeldung: 01.02.2023
(73) Patentinhaber: CLAAS Selbstfahrende Erntemaschinen GmbH, 33428 Harsewinkel (DE)
(72) Erfinder: Westhoff, Mike, 59469 Ense (DE)
(74) Vertreter: CLAAS Gruppe

(56) Entgegenhaltungen:
- DE-A1- 102016 116 548
- US-A- 3 888 132

## Beschreibung

Die vorliegende Erfindung betrifft einen Schrägförderer mit einem Gehäuse mit einander gegenüberliegenden Gehäuseseitenwänden, in denen eine Antriebswelle und eine Umlenkwelle drehbar gelagert sind, wobei auf der Antriebswelle zumindest drei Antriebsräder und auf der Umlenkwelle zumindest drei Umlenkräder zum Fördern von Erntegut in eine selbstfahrende Erntemaschine angeordnet sind, wobei das jeweilige Antriebsrad eine sich konzentrisch zur Antriebswelle erstreckende Nabe mit koaxial zur Antriebswelle angeordneten Mitnehmern aufweist, welche zum form- und/oder kraftschlüssigen Transport eines jeweiligen mit einer Verzahnung ausgeführten Riemens ausgeführt sind, wobei zueinander benachbarte Riemen mittels parallel zur Antriebsachse angeordneten Förderleisten untereinander verbunden sind, wobei zwei Antriebsräder außenseitig auf der Antriebswelle angeordnet sind und dass das zumindest eine weitere Antriebsrads innenliegend zwischen diesen auf der Antriebswelle angeordnet ist. Weiterhin betrifft die Erfindung eine selbstfahrende Erntemaschine mit einem Schrägförderer.

Mit einem an einer selbstfahrenden Erntemaschine angeordneten Vorsatzgerät geerntetes Erntegut wird mittels eines Schrägförderers in eine selbstfahrende Erntemaschine, beispielsweise einen Mähdrescher, gefördert, und dann dort verarbeitet. Zumeist werden bislang dafür als Kettenförderer ausgebildete Schrägförderer verwendet. Solche Schrägförderer weisen zumindest zwei parallel zueinander angeordnete Förderketten auf, zwischen denen Förderleisten zum Fördern des Erntegutes angeordnet sind. Bekannt ist aber auch die Verwendung von Riemen anstelle der Förderketten, beispielsweise aus einem gewebelagenverstärkten, vernetzten Polymer.

Aus der DE 10 2016 116 548 A1 ist ein Schrägförderer sowie eine selbstfahrende Erntemaschine mit einem Schrägförderer bekannt. Der Schrägförderer weist auf einer Antriebswelle angeordnete Antriebsräder auf, welche Mitnehmer aufweisen, die gleichmäßig verteilt an einer Nabe des jeweiligen Antriebsrades angeordnet sind, wobei sich die Mitnehmer von der Nabe ausgehend zu einem offenen Ende hin erstrecken und zum form- und/oder kraftschlüssigen Transport eines mit einer Verzahnung ausgeführten Riemens vorgesehen sind. Die Mitnehmer bilden die Zähne des Antriebsrades, welche in die Verzahnung des Riemens eingreifen. Zueinander benachbarte Riemen sind mittels parallel zur Antriebsachse angeordneter Förderleisten untereinander verbunden. Zwei Antriebsräder sind außenseitig auf der Antriebswelle benachbart zur Gehäuseseitenwand angeordnet und zumindest ein weiteres Antriebsrad ist innenliegend zwischen diesen auf der Antriebswelle angeordnet. Die Antriebsräder auf der Antriebswelle unterscheiden sich nur durch ihre Position. Bedingt durch die innenliegende Anordnung von zumindest einem weiteren Antriebsrad laufen die Förderleisten über die gesamte Antriebsradbreite dieses zumindest einen weiteren Antriebsrades mit. Während die jeweilige Nabe der außenseitig auf der Antriebswelle angeordneten Antriebsräder mit den Förderleisten nicht in Berührung kommt, da sich diese außerhalb vom Eingriff bzw. dem äußeren Abmaß vom montiertem Gurtband befindet, kommt es bei dem zumindest einen innenliegenden Antriebsrad zu einem Kontakt einer axialen Stirnfläche der Nabe mit den Förderleisten. Damit geht eine unerwünschte Geräuschentwicklung einher. Zudem führt dieser Kontakt zwischen der Förderleiste und der Nabe zu einem unruhigen Laufverhalten und zu einem Verschleiß.

Aufgabe der vorliegenden Erfindung ist es, einen Schrägförderer für eine selbstfahrende Erntemaschine bereitzustellen, bei dem das Auftreten einer Geräuschbildung wegen eines Kontaktes zwischen den Förderleisten und dem zumindest einen innenliegenden Antriebsrad vermieden wird.

Die Aufgabe wird gelöst mit einem Schrägförderer mit den Merkmalen des unabhängigen Patentanspruchs 1 sowie einer selbstfahrenden Erntemaschine mit den Merkmalen des nebengeordneten Patentanspruchs 11.

Vorteilhafte Ausführungsformen und Weiterbildungen sind den abhängigen Ansprüchen zu entnehmen.

Gemäß dem Anspruch 1 wird ein Schrägförderer mit einem Gehäuse mit einander gegenüberliegenden Gehäuseseitenwänden vorgeschlagen, wobei in den Gehäuseseitenwänden eine Antriebswelle und eine Umlenkwelle drehbar gelagert sind, wobei auf der Antriebswelle zumindest drei Antriebsräder und auf der Umlenkwelle zumindest drei Umlenkräder zum Fördern von Erntegut in eine selbstfahrende Erntemaschine angeordnet sind, wobei das jeweilige Antriebsrad eine sich konzentrisch zur Antriebswelle erstreckende Nabe mit koaxial zur Antriebswelle angeordneten Mitnehmern aufweist, welche zum form- und/oder kraftschlüssigen Transport eines jeweiligen mit einer Verzahnung ausgeführten Riemens ausgeführt sind, wobei zueinander benachbarte Riemen mittels parallel zur Antriebsachse angeordneten Förderleisten untereinander verbunden sind, wobei zwei Antriebsräder außenseitig auf der Antriebswelle angeordnet sind und dass das zumindest eine weitere Antriebsrads innenliegend zwischen diesen auf der Antriebswelle angeordnet ist. Erfindungsgemäß ist vorgesehen, dass die Nabe des zumindest einen weiteren Antriebsrades entlang ihrer Außenumfangsfläche eine wellenförmige Kontur aufweist.

Wesentlich für die Erfindung ist, dass durch die wellenförmige Kontur der auftretende Polygoneffekt des Riemens sowie der vom geförderten Erntegut ausgeübte Anpressdruck nicht dazu führen, dass die Förderleisten mit der Nabe in Kontakt kommen. Dies wird dadurch erreicht, dass die Förderleisten in Wellentäler bzw. Vertiefungen der Nabe eintauchen können, wobei aufgrund des Polygoneffekts des Riemens zwischen dem tiefsten Punkt der wellenförmigen Kontur auf der Außenumfangsfläche der Nabe und der Förderleiste auf dem Riemen ein radialer Abstand verbleibt. Dieser radiale Abstand ist so groß, dass eine Berührung oder ein Kontakt zwischen der Außenumfangsfläche der Nabe und der Förderleiste vermieden wird. Somit wird neben der Vermeidung oder zumindest Reduzierung von Verschleiß an dem zumindest einen weiteren innenliegenden Antriebsrad auch die aus einem Kontakt resultierende Geräuschentwicklung vermieden.

Hierzu kann die wellenförmige Kontur wechselweise angeordnete Erhebungen und Vertiefungen aufweisen.

Bevorzugt kann die Nabe des zumindest einen weiteren Antriebsrades im Bereich der Erhebungen in radialer Richtung verstärkt ausgeführt sein. Dabei kann im höchsten Punkt einer Erhebung die Nabe einen ersten Außendurchmesser aufweisen, während die Nabe am tiefsten Punkt einer Vertiefung einen zweiten Außendurchmesser aufweist, der kleiner als der Außendurchmesser der Nabe und größer als ein Antriebsdurchmesser des Antriebsrades, der durch die Anordnung der Mitnehmer bestimmt ist, ist.

Insbesondere können die durch die Erhebungen beabstandeten Vertiefungen in einem regelmäßigen Abstand zueinander über die Außenumfangsfläche der Nabe verteilt angeordnet sein.

Dabei kann der Abstand zwischen den Vertiefungen in Abhängigkeit vom Abstand der Förderleisten zueinander gewählt sein. Dadurch kann gewährleistet werden, dass die Förderleisten stets vollständig in die Vertiefung der Nabe des zumindest einen innenliegenden Antriebsrades eintauchen. Dadurch kann ein ungewollter Kontakt mit den Erhebungen vermieden werden.

Gemäß einer bevorzugten Weiterbildung können die Vertiefungen einen abschnittsweise bogenförmigen oder polygonen Verlauf aufweisen. So können zwei seitliche Flanken und ein zwischen den Flanken verlaufender Sockelbereich der Vertiefungen jeweils einen bogenförmigen Verlauf aufweisen, wobei die Flanken zu den beiden benachbarten Erhebungen hin ansteigend ausgeführt sind. Alternativ können die seitlichen Flanken einen bogenförmigen Verlauf aufweisen, während der Sockelbereich der Vertiefungen im Wesentlichen einen geradlinigen Verlauf aufweist. Weiter alternativ können die seitlichen Flanken und der Sockelbereich der Vertiefungen einen im Wesentlichen geradlinigen Verlauf aufweisen.

Insbesondere können die Mitnehmer spielfrei mit der Nabe eines jeweiligen Antriebsrades verbunden sein. So können zur spielfreien Verbindung der Mitnehmer mit der Nabe diese durch einen Kegelsitz oder einen Pressverbund miteinander verbunden sein.

Weiter bevorzugt können die Mitnehmer mittels einer Schraubverbindung mit der Nabe eines jeweiligen Antriebsrades verbunden sein. Die Mitnehmer können dabei durch eine Schraube gegen die Nabe gekontert sein.

Weiter bevorzugt können die Nabe und die Mitnehmer auch als eine einstückige Einheit ausgeführt sein. Dabei kann die Einheit aus Nabe und Mitnehmern als ein Gussbauteil ausgeführt sein.

Insbesondere kann zwischen zwei Vertiefungen der wellenförmigen Kontur ein Mitnehmer angeordnet sein. Insbesondere können die Mitnehmer kreiszylindrisch ausgeführt und aus einem Rundstahl gefertigt sein. Unter Beachtung von Toleranzen für das Rohmaterial kann eine Nachbearbeitung der Mitnehmer auf der Gesamtbreite des Riemens entfallen. Die Mitnehmer können untereinander unverbunden sein, d.h. sie können als separate Bauteile ausgeführt sein, die an der Nabe befestigt sind.

Die eingangs gestellte Aufgabe wird weiterhin durch eine selbstfahrende Erntemaschine mit einem Schrägförderer gelöst, welcher gemäß einem der Ansprüche 1 bis 10 ausgebildet ist.

Die vorliegende Erfindung wird nachstehend anhand eines in den Zeichnungen dargestellten Ausführungsbeispieles näher erläutert.

Es zeigen:
- Fig. 1: schematisch einen Ausschnitt aus einer selbstfahrenden Erntemaschine in einer Seitenansicht;
- Fig. 2: einen Ausschnitt aus einem Schrägförderer im Bereich seines Abgabeendes;
- Fig. 3: schematisch eine Seitenansicht eines innenliegenden Antriebsrades gemäß Fig. 2; und
- Fig. 4: eine Teilansicht des innenliegenden Antriebsrades gemäß Fig. 3.

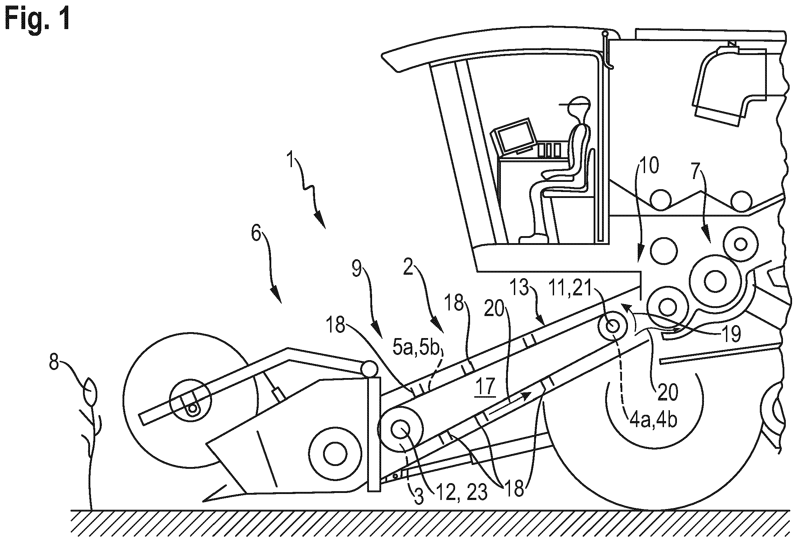

Fig. 1 zeigt schematisch einen Ausschnitt aus einer Anordnung mit einem Schrägförderer 2 und einer selbstfahrenden Erntemaschine 1, hier einem Mähdrescher. Im Folgenden werden die Begriffe Erntemaschine 1 und Mähdrescher synonym verwendet.

Der Schrägförderer 2 ist lösbar an der Erntemaschine 1 angeordnet. Er ist zwischen einem Vorsatzgerät 6 und der Erntemaschine 1 angeordnet. Das Vorsatzgerät 6 ist zum Aufnehmen von Erntegut 8 vorgesehen. Um das Erntegut 8 bodennah abschneiden zu können, ist der Schrägförderer 2 um eine Schwenkachse (nicht gezeigt) schwenkbar an der Erntemaschine angeordnet, so dass das Vorsatzgerät 6 höhenverstellbar ist. Mit dem Schrägförderer 2 wird das Erntegut 8 zu dessen Verarbeitung in die Erntemaschine 1 gefördert. Das Erntegut 8 wird hier in einem Dreschwerk 7 der Erntemaschine verarbeitet.

Der Schrägförderer 2 weist zumindest drei Antriebsräder 4a, 4b und diesen zugeordnete Umlenkräder 3 auf. Das jeweilige Umlenkrad 3 ist im Bereich eines Zuführendes 9 des Schrägförderers 2 angeordnet. Am Zuführende 9 ist das Vorsatzgerät 6 am Schrägförderer 2 befestigt. Das vom Vorsatzgerät 6 aufgenommene Erntegut 8 wird am Zuführende 9 in den Schrägförderer 2 eingeführt.

Die Antriebsräder 4a, 4b sind an einem dem Zuführende 9 gegenüberliegenden Abgabeende 10 des Schrägförderers 2 angeordnet, an dem das Erntegut 8 den Schrägförderer 2 verlässt. Das Erntegut gelangt in die Erntemaschine 1, hier in das Dreschwerk 7, zu dessen weiterer Verarbeitung.

Das jeweilige Antriebsrad 4a, 4b ist mittels einer sich konzentrisch zu einer Antriebsachse 11 erstreckenden Nabe 22a, 22b drehfest an einer Antriebswelle 21 angeordnet. Ebenso ist das jeweilige Umlenkrad 3 drehfest an einer Umlenkachse 12 angeordnete Umlenkwelle 23 gelagert. Sowohl die Antriebswelle 21 als auch die Umlenkwelle 23 sind drehbar in einem Gehäuse 13, hier in einander gegenüberliegenden Gehäuseseitenwänden 14, gelagert. Die im Wesentlichen vertikal verlaufenden Gehäuseseitenwände 14 sind durch eine Gehäuseunterwand 15 und eine Gehäuseoberwand 16, die sich zwischen den Gehäuseseitenwänden 14 horizontal zu diesen erstrecken, miteinander verbunden. Gemeinsam begrenzen die Gehäuseseitenwände 14, die Gehäuseunterwand 15 sowie die Gehäuseoberwand 16 einen insbesondere etwa quaderförmig ausgebildeten Innenraum 17 des Schrägförderers 2. Zum Fördern des Erntegutes 8 sind eine der Anzahl der Antriebsräder 4a, 4b entsprechende Anzahl endloser Riemen 5a, 5b oder Gurtbänder vorgesehen, welche das jeweilige Antriebsrad 4a, 4b und das zugehörige Umlenkrad 3 umschlingt. Auf den Riemen 5a, 5b sind Förderleisten 18 äquidistant zueinander angeordnet, welche sich parallel zur Antriebsachse 11 erstrecken und der Mitnahme des Erntegutes 8 dienen. Die Förderleisten 18 erstrecken sich zwischen jeweils zwei Riemen 5a, 5b und verbinden diese miteinander.

In dem Schrägförderer 2 wird das Erntegut 8 unterschächtig gefördert. Das heißt, dass es entlang der Unterwand 15 gefördert wird. Dafür werden die Antriebsräder 4a, 4b in eine Drehrichtung 19 um die Antriebsachse 11 angetrieben. Eine Förderrichtung 20 des Erntegutes 8 ist hier durch zwei Pfeile, einer im Schrägförderer 2 und einer am Abgabeende 10, schematisch gezeigt.

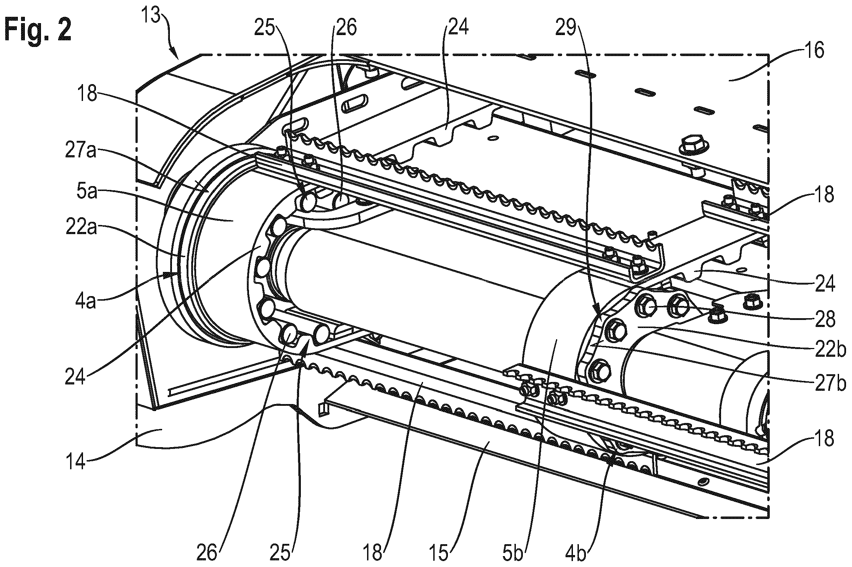

In Fig. 2 ist ein Ausschnitt aus dem Schrägförderer 2 im Bereich seines Abgabeendes 10 dargestellt. Die in den in einander gegenüberliegenden Gehäuseseitenwänden 14 gelagerte Antriebswelle 21 weist an ihren äußeren Enden jeweils ein außenliegendes Antriebsrad 4a auf, welches unmittelbar benachbart zu der jeweiligen Gehäuseseitenwand 14 angeordnet ist. Zwischen den außenliegenden Antriebsrädern 4a ist das zumindest eine weitere innenliegende Antriebsrad 4b angeordnet. Die Förderleisten 18 erstrecken sich jeweils zwischen zwei benachbarten Riemen 5a, 5b, von denen der eine Riemen 5a um eines der außenliegenden Antriebsräder 4a und der andere Riemen um das hierzu benachbarte, zumindest eine innenliegende Antriebsrad 4b umläuft. Die Antriebsräder 4a, 4b sind zum form- und/oder kraftschlüssigen Transport der Riemen 5a, 5b oder der Gurtbänder ausgebildet. Hierzu weisen die Riemen 5a, 5b eine Verzahnung 24 auf. Auf der jeweiligen Nabe 22a, 22b eines Antriebsrades 4a, 4b sind Mitnehmer 25 gleichmäßig verteilt angeordnet. Hierzu sind die Mitnehmer 25 an einer axialen Stirnfläche der Nabe 22a, 22b angeordnet. Die Mitnehmer 25 sind koaxial zur Antriebsachse 11 angeordnet. Die Mitnehmer 25 sind hier und vorzugsweise kreiszylindrisch ausgeführt. Die Mitnehmer 25 sind untereinander unverbunden, d.h. sie sind als separate Bauteile ausgeführt. Insbesondere können die Mitnehmer 25 aus einem Rundstahl gefertigt sein. Die Mitnehmer 25 erstrecken sich von der Nabe 22a, 22b ausgehend zu einem offenen Ende 26 des Antriebsrades 4a, 4b hin. Die Mitnehmer 25 sind zum form- und/oder kraftschlüssigen Transport des Riemens 5 oder Gurtbandes vorgesehen. Hierbei sollten die Mitnehmer 25 spielfrei mit der Nabe 22a, 22b verbunden sein. Die Mitnehmer 25 können zur spielfreien Verbindung mit der Nabe 22a, 22b durch einen Kegelsitz oder einen Pressverbund verbunden sein. Die Mitnehmer 25 sind mittels einer Schraubverbindung 28 mit der jeweiligen Nabe 22a, 22b verbunden.

Zwischen den einzelnen Mitnehmern 25 sind Zwischenräume vorgesehen, in welche die Verzahnung 24 des jeweiligen Riemens 5a, 5b eingreift. Die axiale Stirnfläche der Nabe 22a, 22b bildet einen Anschlag für den entsprechenden Riemen 5a, 5b, welcher ein Verschieben des Riemens 5a, 5b in oder gegen eine axiale Richtung der Antriebsachse 11 begrenzt.

Wie aus Fig. 2 ersichtlich, unterscheiden sich die beiden außenseitig auf der Antriebswelle 21 angeordneten Antriebsräder 4a von dem zumindest einen innenseitig angeordneten Antriebsrad 4b durch die unterschiedliche Ausgestaltung der Nabe 22 des außenseitigen Antriebsrades 4a und der Nabe 22b des innenseitig angeordneten Antriebsrades 4b. Während die Förderleiste 18, die mit einem Ende an dem Riemen 5a angeordnet ist, mit diesem randseitig abschließt, überlappt das andere Ende der Förderleiste 18 den Riemen 5b in axialer Richtung, d.h. in zur Antriebswelle 21 parallel verlaufender Richtung.

Die Antriebsräder 4a, 4b weisen jeweils einen Antriebsdurchmesser D_A auf, welcher durch die kreisförmige Anordnung der Mitnehmer 25 an der axialen Stirnfläche der Nabe 22a, 22b bestimmt ist. Die Mitnehmer 25 sind zur jeweiligen Außenumfangsfläche 27a, 27b der Nabe 22a, 22b beabstandet angeordnet, d.h. der Antriebsdurchmesser D_A der Antriebsräder 4a, 4b ist kleiner als der Außendurchmesser der Nabe 22a, 22b.

Bei den durch die Antriebsräder 4a, 4b formschlüssig angetriebenen Riemen 5a, 5b tritt der sogenannte Polygoneffekt auf. Dabei können die als Riemen 5a, 5b ausgebildeten Zugmittel auf dem jeweiligen Antriebsrad 4a, 4b nicht kreisrund auf- und ablaufen, sodass es zu Abwinkelungen des jeweiligen Riemens 5a, 5b kommt. Dadurch entsteht aus der kreisrunden Anordnung der Mitnehmer 25 auf dem Antriebsrad 4a, 4b wirkmäßig ein Polygon mit unterschiedlich vielen Sehnen entsprechend dem Antriebsdurchmesser D_A des Antriebsrades 4a, 4b. Der jeweilige Riemen 5a, 5b taucht zwischen zwei Mitnehmern 25 tiefer ein. Da die Leiste 18 die Nabe 22a der außenliegenden Antriebsräder 4a nicht in axialer Richtung übergreift, kann es auch nicht zu einem Kontakt zwischen der Leiste 18 und der Nabe 22a kommen.

Um zu vermeiden, dass die Förderleisten 18 bei einem Umlauf um das zumindest eine innenliegende Antriebsrad 4b aufgrund des an dem Riemen 5b auftretenden Polygoneffekts und des hohen Anpressdrucks des geförderten Ernteguts gegen die Außenumfangsfläche 27b der Nabe 22b gedrückt werden, ist vorgesehen, dass die Nabe 22b des zumindest einen weiteren Antriebsrades 4b entlang ihrer Außenumfangsfläche 27b eine wellenförmige Kontur 29 aufweist.

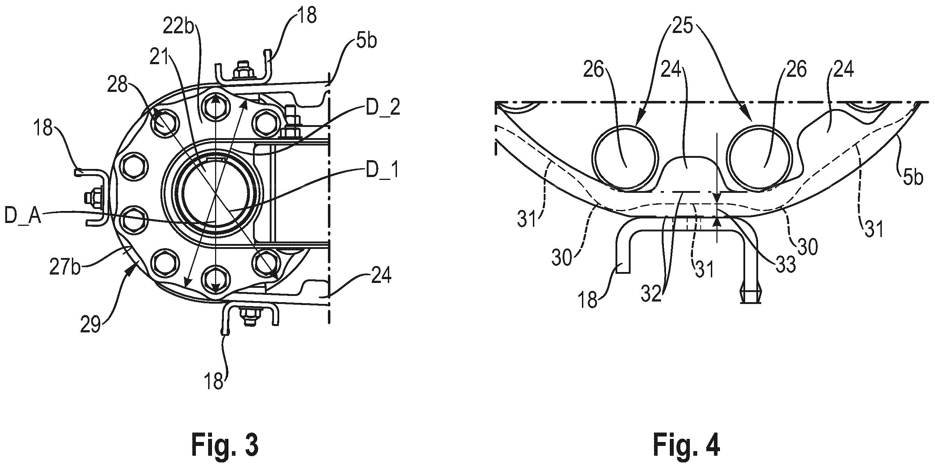

Die Darstellung in Fig. 3 zeigt schematisch eine Seitenansicht des zumindest einen innenliegenden Antriebsrades 4b gemäß Fig. 2. In fig. 4 ist eine Teilansicht des innenliegenden Antriebsrades 4b gemäß Fig. 3 dargestellt. Dabei zeigt die Darstellung in Fig. 4 eine Ansicht auf die offenen Enden 26 der Mitnehmer 25. Die durch den Riemen 5b verdeckte Kontur 29 der Nabe 22b ist strichliniert dargestellt. Die wellenförmige Kontur 29 weist wechselweise angeordnete Erhebungen 30 und Vertiefungen 31 auf. Im höchsten Punkt einer Erhebung 30 weist die Nabe 22b einen ersten Außendurchmesser D_1 auf, während die Nabe 22b am tiefsten Punkt einer Vertiefung 31 einen zweiten Außendurchmesser D_2 aufweist, der kleiner als der erste Außendurchmesser D_1 der Nabe 22b und größer als der Antriebsdurchmesser D_A des Antriebsrades 4b ist.

Zwischen zwei Vertiefungen 31 der wellenförmigen Kontur 29 ist jeweils ein Mitnehmer 25 angeordnet. Dabei ist die Nabe 22b des zumindest einen weiteren Antriebsrades 4b im Bereich der Erhebungen 30 in radialer Richtung verstärkt ausgeführt. Dies dient dazu, den jeweiligen Mitnehmer 25 bei ausreichender Festigkeit spielfrei mit der Nabe 22b verbinden zu können. Die durch die Erhebungen 30 beabstandeten Vertiefungen 30 sind in einem regelmäßigen Abstand zueinander über die Außenumfangsfläche 27b der Nabe 22b verteilt angeordnet. Hierzu ist der Abstand zwischen den Vertiefungen in Abhängigkeit vom Abstand der Förderleisten 18 zueinander gewählt. Die Vertiefungen 31 können einen abschnittsweise bogenförmigen oder polygonen Verlauf aufweisen.

In Fig. 4 ist der an dem Riemen 5b auftretende Polygoneffekt veranschaulicht. Dem zwischen den beiden dargestellten Mitnehmern 25 eingetauchten Zahn der innenseitigen Verzahnung 24 liegt eine der außenseitig an dem Riemen 5b angeordneten Förderleiste 18 gegenüber. Dieser Abschnitt des Riemens 5b, der sich zwischen den beiden Erhebungen 30 erstreckt, ist durch eine Strichpunktlinie dargestellt, welche die Abflachung 32 des Riemens 5b zwischen zwei Mitnehmer 25 aufgrund des Polygoneffekts verdeutlichen soll. Die Vertiefung 31 im Bereich der Abflachung 32 des Riemens 5b verhindert, dass die Förderleiste 18 mit der Außenumfangsfläche 27b der Nabe 22b in Berührung kommt.

Erreicht wird dies dadurch, dass die Förderleisten 18 in Wellentäler bzw. die Vertiefungen 31 der Nabe 22b eintauchen können, wobei aufgrund des Polygoneffekts des Riemens 5b zwischen dem tiefsten Punkt der wellenförmigen Kontur 29 auf der Außenumfangsfläche 27b der Nabe 22b und der Förderleiste 18 auf dem Riemen 5b ein radialer Abstand 33 verbleibt. Dieser radiale Abstand 33 ist so groß, dass eine Berührung oder ein Kontakt zwischen der Außenumfangsfläche 27b der Nabe 22b und der Förderleiste 18 vermieden wird. Der radiale Abstand 33 ergibt sich in Abhängigkeit vom vorgesehenen zweiten Durchmesser D_2 der Vertiefungen 31. Somit wird neben der Vermeidung oder zumindest Reduzierung von Verschleiß an dem zumindest einen weiteren Antriebsrad 4b auch die aus einem Kontakt resultierende Geräuschentwicklung vermieden.

**Bezugszeichenliste**

| | | | |
|---|---|---|---|
| 1 | Erntemaschine/Mähdrescher | 30 | Erhebung |
| 2 | Schrägförderer | 31 | Vertiefung |
| 3 | Umlenkrad | 32 | Abflachung |
| 4a | Außenseitiges Antriebsrad | 33 | Radialer Abstand |
| 4b | Innenliegende Antriebsrad | | |
| 5a | Riemen | D_A | Antriebsdurchmesser |
| 5b | Riemen | D_1 | Erster Außendurchmesser |
| 6 | Vorsatzgerät | D_2 | Zweiter Außendurchmesser |
| 7 | Dreschwerk | | |
| 8 | Erntegut | | |
| 9 | Zuführende | | |
| 10 | Abgabeende | | |
| 11 | Antriebsachse | | |
| 12 | Umlenkachse | | |
| 13 | Gehäuse | | |
| 14 | Gehäuseseitenwand | | |
| 15 | Gehäuseunterwand | | |
| 16 | Gehäuseoberwand | | |
| 17 | Innenraum von 2 | | |
| 18 | Förderleiste | | |
| 19 | Drehrichtung | | |
| 20 | Förderrichtung | | |
| 21 | Antriebswelle | | |
| 22a | Nabe von 4a | | |
| 22b | Nabe von 4b | | |
| 23 | Umlenkwelle | | |
| 24 | Verzahnung | | |
| 25 | Mitnehmer | | |
| 26 | Offenes Ende | | |
| 27a | Außenumfangsfläche von 22a | | |
| 27b | Außenumfangsfläche von 22b | | |
| 28 | Schraubverbindung | | |
| 29 | Wellenförmige Kontur | | |

## Patentansprüche

1. Schrägförderer (2) mit einem Gehäuse (13) mit einander gegenüberliegenden Gehäuseseitenwänden (14), in denen eine Antriebswelle (21) und eine Umlenkwelle (23) drehbar gelagert sind, wobei auf der Antriebswelle (21) zumindest drei Antriebsräder (4a, 4b) und auf der Umlenkwelle zumindest drei Umlenkräder (3) zum Fördern von Erntegut (8) in eine selbstfahrende Erntemaschine (1) angeordnet sind, und mit einer der Anzahl der Antriebsräder (4a, 4b) entsprechenden Anzahl endloser Riemen (5), wobei das jeweilige Antriebsrad (4a, 4b) eine sich konzentrisch zur Antriebswelle (21) erstreckende Nabe (22a, 22b) mit koaxial zur Antriebswelle (21) angeordneten Mitnehmern (25) aufweist, welche zum form- und/oder kraftschlüssigen Transport eines jeweiligen mit einer Verzahnung (24) ausgeführten Riemens (5) ausgeführt sind, wobei zueinander benachbarte Riemen (5) mittels parallel zur Antriebsachse (11) angeordneten Förderleisten (18) untereinander verbunden sind, wobei zwei Antriebsräder (4a) außenseitig auf der Antriebswelle (21) angeordnet sind und dass das zumindest eine weitere Antriebsrads (4b) innenliegend zwischen diesen auf der Antriebswelle (21) angeordnet ist, **dadurch gekennzeichnet, dass** die Nabe (22b) des zumindest einen weiteren Antriebsrades (4b) entlang ihrer Außenumfangsfläche (27b) eine wellenförmige Kontur (29) aufweist.

2. Schrägförderer (2) nach Anspruch 1, **dadurch gekennzeichnet, dass** die wellenförmige Kontur (29) wechselweise angeordnete Erhebungen (30) und Vertiefungen (31) aufweist.

3. Schrägförderer (2) nach Anspruch 1 oder 2, **dadurch gekennzeichnet, dass** zwischen zwei Vertiefungen (31) der wellenförmigen Kontur (29) ein Mitnehmer (25) angeordnet ist.

4. Schrägförderer (2) nach Anspruch 2 oder 3, **dadurch gekennzeichnet, dass** die Nabe (22b) des zumindest einen weiteren Antriebsrades (4b) im Bereich der Erhebungen (30) in radialer Richtung verstärkt ausgeführt ist.

5. Schrägförderer (2) nach einem der Ansprüche 2 bis 4 **dadurch gekennzeichnet, dass** die durch die Erhebungen (30) beabstandeten Vertiefungen (31) in einem regelmäßigen Abstand zueinander über die Außenumfangsfläche (27b) der Nabe (22b) verteilt angeordnet sind.

6. Schrägförderer (2) nach Anspruch 5, **dadurch gekennzeichnet, dass** der Abstand zwischen den Vertiefungen (31) in Abhängigkeit vom Abstand der Förderleisten (18) zueinander gewählt ist.

7. Schrägförderer (2) nach einem der Ansprüche 2 bis 6, **dadurch gekennzeichnet, dass** die Vertiefungen (31) einen abschnittsweise bogenförmigen oder polygonen Verlauf aufweisen.

8. Schrägförderer (2) nach einem der vorangehenden Ansprüche, **dadurch gekennzeichnet, dass** die Mitnehmer (25) kreiszylindrisch ausgeführt und aus einem Rundstahl gefertigt sind.

9. Schrägförderer (2) nach einem der vorangehenden Ansprüche, **dadurch gekennzeichnet, dass** die Mitnehmer (25) spielfrei mit der Nabe (22a, 22b) eines jeweiligen Antriebsrades (4a, 4b) verbunden sind.

10. Schrägförderer (2) nach einem der vorangehenden Anspruch, **dadurch gekennzeichnet, dass** die Mitnehmer (25) mittels einer Schraubverbindung (28) mit der Nabe (22a, 22b) eines jeweiligen Antriebsrades (4a, 4b) verbunden sind.

11. Selbstfahrende Erntemaschine (1) mit einem Schrägförderer (2), welcher nach einem der Ansprüche 1 bis 10 ausgebildet ist.

## Claims

1. Inclined conveyor (2) having a housing (13) with mutually oppositely situated housing side walls (14) in which a drive shaft (21) and a deflection shaft (23) are mounted rotatably, wherein there are arranged on the drive shaft (21) at least three drive wheels (4a, 4b) and on the deflection shaft at least three deflection wheels (3) for conveying crop (8) into a self-propelled harvester (1), and having a number of endless belts (5) corresponding to the number of drive wheels (4a, 4b), wherein the respective drive wheel (4a, 4b) has a hub (22a, 22b) extending concentrically with respect to the drive shaft (21) and having drivers (25) which are arranged coaxially with respect to the drive shaft (21) and which are configured for form-fitting and/or force-fitting transport of a respective belt (5) designed with a toothing (24), wherein mutually adjacent belts (5) are connected to one another by means of conveyor strips (18) that are arranged parallel to the drive axis (11), wherein two drive wheels (4a) are arranged on the outside of the drive shaft (21), and the at least one further drive wheel (4b) is arranged internally therebetween on the drive shaft (21), **characterized in that** the hub (22b) of the at least one further drive wheel (4b) has an undulating contour (29) along its outer circumferential surface (27b).

2. Inclined conveyor (2) according to Claim 1, **characterized in that** the undulating contour (29) has elevations (30) and depressions (31) in an alternating arrangement.

3. Inclined conveyor (2) according to Claim 1 or 2, **characterized in that** a driver (25) is arranged between two depressions (31) of the undulating contour (29).

4. Inclined conveyor (2) according to Claim 2 or 3, **characterized in that** the hub (22b) of the at least one further drive wheel (4b) is designed to be reinforced in a radial direction in the region of the elevations (30).

5. Inclined conveyor (2) according to one of Claims 2 to 4, **characterized in that** the depressions (31) spaced apart by the elevations (30) are arranged so as to be distributed over the outer circumferential surface (27b) of the hub (22b) spaced apart from one another at regular intervals.

6. Inclined conveyor (2) according to Claim 5, **characterized in that** the distance between the depressions (31) is selected according to the distance of the conveyor strips (18) from one another.

7. Inclined conveyor (2) according to one of Claims 2 to 6, **characterized in that** the depressions (31) have a sectionally arcuate or polygonal profile.

8. Inclined conveyor (2) according to one of the preceding claims, **characterized in that** the drivers (25) are of circular-cylindrical form and are manufactured from round bar steel.

9. Inclined conveyor (2) according to one of the preceding claims, **characterized in that** the drivers (25) are connected in a play-free manner to the hub (22a, 22b) of a respective drive wheel (4a, 4b).

10. Inclined conveyor (2) according to one of the preceding claims, **characterized in that** the drivers (25) are connected to the hub (22a, 22b) of a respective drive wheel (4a, 4b) by means of a screw connection (28).

11. Self-propelled harvester (1) having an inclined conveyor (2) that is designed according to one of Claims 1 to 10.

## Revendications

1. Transporteur incliné (2) comprenant un carter (13) doté de parois latérales de carter (14) situées en vis-à-vis l'une de l'autre, dans lesquelles un arbre d'entraînement (21) et un arbre de renvoi (23) sont montés avec possibilité de rotation, au moins trois roues d'entraînement (4a, 4b) étant disposées sur l'arbre d'entraînement (21), et au moins trois roues de renvoi (3) étant disposées sur l'arbre de renvoi, aux fins de transporter des produits à récolter (8) dans une machine de récolte (1) automotrice, et comprenant un nombre de courroies (5) sans fin qui correspond au nombre de roues d'entraînement (4a, 4b), la roue d'entraînement (4a, 4b) respective présentant un moyeu (22a, 22b) qui s'étend de manière concentrique avec l'arbre d'entraînement (21) et est doté de moyens entraîneurs (25) qui sont disposés de manière coaxiale avec l'arbre d'entraînement (21) et sont agencés en vue du transport par complémentarité de forme et/ou par adhérence d'une courroie (5) respective réalisée avec une denture (24), des courroies (5) adjacentes les unes aux autres étant reliées entre elles au moyen de baguettes de convoyage (18) disposées parallèlement à l'arbre d'entraînement (21), deux roues d'entraînement (4a) étant placées côté extérieur sur l'arbre d'entraînement (21), et que la roue d'entraînement supplémentaire (4b), au nombre d'au moins une, est disposée à l'intérieur entre celles-ci sur l'arbre d'entraînement (21), **caractérisé en ce que** le moyeu (22b) de la roue d'entraînement supplémentaire (4b), au nombre d'au moins une, présente un contour ondulé (29) le long de sa surface périphérique extérieure (27b).

2. Transporteur incliné (2) selon la revendication 1, **caractérisé en ce que** le contour ondulé (29) présente des saillies (30) et des creux (31) disposés en alternance.

3. Transporteur incliné (2) selon la revendication 1 ou 2, **caractérisé en ce que**, entre deux creux (31) du contour ondulé (29), il est prévu un moyen entraîneur (25).

4. Transporteur incliné (2) selon la revendication 2 ou 3, **caractérisé en ce que** le moyeu (22b) de la roue d'entraînement supplémentaire (4b), au nombre d'au moins une, est renforcé dans la direction radiale, dans la région des saillies (30).

5. Transporteur incliné (2) selon une des revendications 2 à 4, **caractérisé en ce que** les creux (31), qui sont espacés par les saillies (30), sont disposés en étant répartis à une distance uniforme les uns par rapport aux autres sur la surface périphérique extérieure (27a) du moyeu (22b).

6. Transporteur incliné (2) selon la revendication 5, **caractérisé en ce que** la distance entre les creux (31) est choisie en fonction de la distance des baguettes de convoyage (18) les unes par rapport aux autres.

7. Transporteur incliné (2) selon une des revendications 2 à 6, **caractérisé en ce que** les creux (31) présentent une forme d'arc ou une forme polygonale dans certaines portions.

8. Transporteur incliné (2) selon une des revendications précédentes, **caractérisé en ce que** les moyens entraîneurs (25) sont réalisés sous une forme cylindrique circulaire et sont fabriqués à partir d'un acier rond.

9. Transporteur incliné (2) selon une des revendications précédentes, **caractérisé en ce que** les moyens entraîneurs (25) sont reliés sans jeu au moyeu (22a, 22b) d'une roue d'entraînement (4a, 4b) respective.

10. Transporteur incliné (2) selon une des revendications précédentes, **caractérisé en ce que** les moyens entraîneurs (25) sont reliés par un assemblage à vis (28) au moyeu (22a, 22b) d'une roue d'entraînement (4a, 4b) respective.

11. Machine de récolte (1) automotrice dotée d'un transporteur incliné (2) qui est réalisé selon une des revendications 1 à 10.
